# FASCICULE DE BREVET EUROPEEN

(11) **EP 2 472 067 B1**
(45) Date de publication et mention de la délivrance du brevet: **25.09.2013**
(21) Numéro de dépôt: 10197456.6
(22) Date de dépôt: 31.12.2010
(51) Int. Cl.: F01D 25/02, F01D 25/08, F01D 25/12, F02C 7/14, F02C 7/047, F02K 3/06, F02K 1/82

(54) **Intégration d'un échangeur de chaleur surfacique avec débit d'air régulé dans un moteur d'avion**
Einbau eines Oberflächenwärmetauschers mit reguliertem Luftdurchsatz in einen Flugzeugmotor
Integration of a surface heat exchanger with controlled air flow in an airplane engine

(43) Date de publication de la demande: 04.07.2012
(73) Titulaire: Techspace Aero S.A., 4041 Milmort (BE)
(72) Inventeur: Raimarckers, Nicolas, 4263 Tourinne (BE); Borbouse, Cédric, 4560 Clavier (BE); Cornet, Albert, 4800 Verviers (BE); Bajusz, Denis, 4350 Remicourt (BE)
(74) Mandataire: Pronovem

(56) Documents cités:
- EP-A1- 0 514 119
- EP-A2- 1 916 399
- US-A1- 2007 193 277
- US-B1- 6 264 137

## Description

### Objet de l'invention

La présente invention se rapporte à un échangeur de chaleur dans le domaine aéronautique. Elle se rapporte plus particulièrement à un échangeur de chaleur surfacique dont les échanges thermiques peuvent être modulés selon les phases d'utilisation de l'avion respectivement au sol et en vol.

Elle se rapporte en outre à un échangeur de chaleur surfacique muni de moyens de dégivrage d'une partie de l'avion.

La présente invention se rapporte également à un moteur d'avion comportant un tel échangeur de chaleur.

### Etat de la technique

Dans une turbomachine, différents organes et équipements (enceintes de roulements, boîtes d'engrenages, machines électriques, etc.) doivent être lubrifiés et/ou refroidis, la chaleur générée étant généralement transportée par des systèmes d'huile et évacuée par des échangeurs carburant-huile et/ou air-huile.

Les moteurs actuels génèrent de plus en plus de calories de par le chargement croissant des enceintes de paliers, de par l'intégration de boîtes d'engrenages (*gearbox*) de haute puissance (*turboprop*, *open rotor*, etc.) et de par l'intégration de nouveaux équipements (Starter *Generator* de haute puissance, etc.). Il en résulte que les échangeurs carburant-huile (FCOC pour *Fuel-Cooled Oil Cooler*) sont saturés et exigent un complément par des échangeurs air-huile (ACOC pour *Air-Cooled Oil Cooler).*

Il existe plusieurs types d'échangeurs air-huile. Il y a les échangeurs de type brique. Ce sont des échangeurs assez lourds qui ont pour désavantage de perturber le flux d'air et donc de pénaliser le rendement global (augmentation de la consommation de carburant spécifique SFC). En effet, l'alimentation en air des échangeurs de type brique est réalisée par un système d'écopes qui entraînent un accroissement de traînée ou par un système de piquage du flux d'air moteur qui entraîne une perturbation aérodynamique du flux. Les échangeurs de type brique ont cependant pour avantage que le flux d'air peut être contrôlé avec un générateur de débit (*blower,* éjecteur) et/ou un limiteur de débit (*flapper*) selon les phases d'utilisation de l'avion. Cela permet de limiter la masse et l'impact SFC (*Specific Fuel Consumption)* de cette technologie à la base lourde et intrusive dans le flux car le générateur de débit permet de diminuer la taille de l'échangeur et le limiteur de débit diminue l'impact SFC dans les cas où l'échangeur n'est pas nécessaire.

Ainsi le document EP 0 514 119 A1 divulgue un système de refroidissement et ventilation d'une nacelle ayant un moteur dans une baie. Le système comporte un conduit muni d'un échangeur de chaleur air/huile de type brique. L'air froid alimenté via une écope positionnée dans la partie inférieure de la nacelle traverse l'échangeur de chaleur et s'évacue vers la baie de la nacelle, la sortie d'air étant régulée grâce à des moyens d'obturation.

Il existe également des échangeurs dits surfaciques dont l'intérêt est qu'ils perturbent moins le flux aérodynamique. Dans ces derniers, un flux d'air est amené sur une surface d'échange solidaire du circuit d'huile. L'échangeur peut se présenter sous forme d'une plaque comportant d'un côté des ailettes traversées par le flux d'air et, d'un autre côté, des canaux d'huile. Ces échangeurs surfaciques sont intrinsèquement moins lourds et moins intrusifs mais ils ne sont pas munis de moyens de régulation contrairement aux échangeurs de type brique. De plus, même s'ils sont moins intrusifs, leur intégration dans la turbomachine pose néanmoins les problèmes suivants:
- susceptibilité accrue aux impacts et plus particulièrement aux FOD *(Foreign Obj ect Damage)* s'ils sont disposés dans une zone exposée au flux ou à la centrifugation par la soufflante;
- échange de chaleur limité lorsque l'avion est à l'arrêt si l'on utilise des zones externes;
- perturbation du flux, moindre que celle des briques mais permanente, avec impact SFC (potentiellement interaction avec autres éléments dans le flux telles les OGV pour *Outlet Guide Vanes*) et acoustique (potentiellement interaction avec les pulsations de la soufflante).

Dans l'état de la technique, on connaît le document EP 2 075 194 A1 qui présente un échangeur surfacique air-huile où le circuit d'huile est disposé à l'intérieur du bec séparateur (c'est-à-dire le bec de séparation des flux de l'air issu de la soufflante dans une turbomachine à double flux) et où les ailettes sont disposées à l'extérieur de la paroi supérieure du bec séparateur. Le positionnement de l'échangeur dans le bec séparateur permet, hormis le refroidissement de l'huile, de dégivrer le bec séparateur.

Cet échangeur surfacique présente également le désavantage qu'il est dépourvu de moyens de régulation du débit d'air de refroidissement en fonction des conditions d'utilisation de l'avion (vol ou sol).

On connaît également du document EP 1 916 399 A2 dans le domaine des turbomachines, un échangeur de chaleur de type surfacique où les deux surfaces d'échange de l'échangeur sont disposées dans une cavité munie d'une entrée et d'une sortie d'air.

Comme relevé dans la demande EP 2 075 194 A1, les échangeurs air-huile offrent une source de chaleur qui pourrait être avantageusement utilisée pour dégivrer des points d'arrêt du flux d'air, en particulier celui de la nacelle. Actuellement, le dégivrage des points d'arrêt (nacelle et bec de séparation) est réalisé de manière pneumatique par piquage d'air au moteur ou électriquement, nécessitant un prélèvement mécanique entraînant dans chaque cas des pertes de rendement propulsif. D'autre part, l'utilisation croissante de matériaux composites organiques en remplacement de matériaux métalliques nécessite de maîtriser la température à l'intérieur des structures.

### Buts de l'invention

La présente invention vise à fournir un échangeur de chaleur surfacique muni de moyens de régulation permettant de fournir un débit d'air adapté aux besoins de refroidissement.

La présente invention vise également à fournir un échangeur de chaleur dont l'intégration au sein de la turbomachine ne soulève pas les problèmes cités ci-dessus.

La présente invention vise en outre à réaliser un échangeur de chaleur assurant le dégivrage des points d'arrêt du flux d'air.

### Principaux éléments caractéristiques de l'invention

La présente invention se rapporte à un échangeur surfacique air-huile dans un moteur d'avion comportant au moins un premier circuit d'huile et au moins une première et une seconde surface d'échange disposée de part et d'autre du premier circuit d'huile et pouvant chacune être balayée par un flux d'air, ladite seconde surface d'échange étant disposée dans une cavité munie d'une entrée d'air et d'une sortie d'air, ladite entrée et/ou ladite sortie comportant des moyens d'obturation permettant de réguler l'apport d'air sur la seconde surface d'échange.

Selon des modes particuliers de l'invention, l'échangeur surfacique air-huile comporte au moins une ou une combinaison appropriée des caractéristiques suivantes:
- les moyens d'obturation sont en mesure de prendre des positions intermédiaires entre une position complètement fermée et une position complètement ouverte, lesdits moyens étant configurés pour être complètement fermés lorsqu'il faut limiter la traînée de l'avion ou encore lorsque les conditions de dégivrage l'imposent et pour être ouverts lorsqu'il faut augmenter l'échange thermique;
- les moyens d'obturation sont configurés pour être complètement fermés lorsque l'avion est en mode croisière ou en phase de démarrage au sol si nécessaire, pour être ouverts en position intermédiaire lorsque l'avion est en phase de décollage et pour être complètement ouverts lorsque l'avion est en mode ralenti au sol;
- les moyens d'obturation sont sélectionnés parmi un groupe constitué d'un système en translation et d'un système en rotation;
- la première surface d'échange ne comporte pas d'ailettes ou est munie d'ailettes dont la taille est dimensionnée pour réduire l'impact sur les performances aérodynamiques, et, la seconde surface d'échange est munie d'ailettes; les ailettes de la première et de la seconde surface étant dimensionnées pour minimiser une pondération des critères pour la consommation spécifique de carburant, pour minimiser leur masse et pour optimiser leur performance thermique;
- un second circuit d'huile est disposé dans la cavité en dessous des ailettes de la seconde surface d'échange ou est disposé entre le premier circuit d'huile et la seconde surface d'échange;
- un anneau enveloppe les ailettes de la première et/ou de la seconde surface pour augmenter la surface d'échange;
- un éjecteur ou blower est disposé dans la cavité à proximité de la sortie d'air;
- l'éjecteur ou blower est intégré aux ailettes de la seconde surface ou rapporté en aval desdites ailettes;
- l'anneau enveloppant les ailettes de la première surface de l'échangeur ou les ailettes de la première surface bénéficient d'un traitement acoustique afin d'absorber tout ou une partie du spectre acoustique généré par le moteur;
- il est muni de moyens assurant un dégivrage à proximité de l'endroit où il est disposé; lesdits moyens étant configurés pour que le transfert de chaleur s'effectue soit par contact direct avec l'huile de l'échangeur surfacique, soit par convection naturelle, soit par conduction via un pont thermique ou encore par un circuit secondaire via une boucle diphasique;
- ledit échangeur est disposé sur la partie intérieure ou extérieure d'une nacelle de l'avion, la seconde surface d'échange étant disposée dans la cavité de la nacelle;
- ledit échangeur est disposé en amont ou en aval d'une soufflante du moteur de l'avion dans la partie intérieure de la nacelle;
- les moyens d'obturation sont configurés pour être actionnés par un système électrique, électrohydraulique, hydraulique ou pneumatique ou par un système passif activé par la température de l'huile.

La présente invention se rapporte également à un moteur d'avion comportant un échangeur surfacique air-huile tel que décrit ci-dessus.

### Brève description des figures

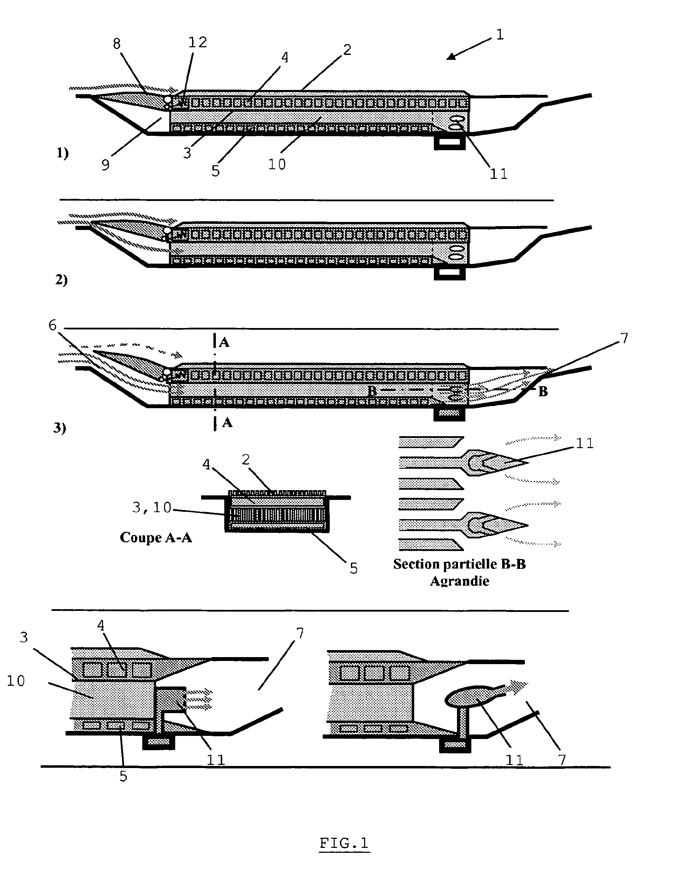

La figure 1 représente respectivement en 1), 2) et 3) une vue en coupe axiale d'un échangeur surfacique ACOC selon un premier mode de réalisation de l'invention dans différentes phases d'utilisation de l'avion. En 1), l'avion est en mode sol en cours de démarrage ou en mode croisière. En 2), l'avion est en phase de décollage (mode MTO pour Max *Take Off*) et en 3), l'avion est en mode ralenti sol (*Ground Idle*). En 3), des coupes selon les axes A-A et B-B sont également présentées. En 1), 2) et 3), un éjecteur est intégré aux ailettes de la surface intérieure de l'échangeur. En bas de figure, deux autres configurations sont présentées où l'éjecteur est rapporté en sortie de l'ACOC.

La figure 2 représente deux vues en coupe axiale d'un échangeur surfacique selon un second mode de réalisation de l'invention. Seules deux positions d'utilisation sont représentées, de haut en bas, respectivement le mode ralenti sol (*Ground Idle*) et le mode sol en cours de démarrage ou croisière.

### Légende

(1) Echangeur air-huile surfacique
(2) Première surface d'échange ou surface extérieure
(3) Seconde surface d'échange ou surface intérieure
(4) Premier circuit d'huile
(5) Second circuit d'huile
(6) Entrée d'air dans la cavité
(7) Sortie d'air hors de la cavité
(8) Moyens d'obturation
(9) Cavité
(10) Conduit
(11) Ejecteur (ou blower)
(12) Ressort
(13) Chambre de commande d'un premier moyen d'obturation
(14) Chambre de commande d'un second moyen d'obturation

### Description générale de l'invention

La présente invention consiste à intégrer un échangeur surfacique air-liquide dans un avion et, préférentiellement, dans le système propulsif (moteur + nacelle). Selon l'invention, l'échangeur surfacique est au moins muni de deux surfaces d'échange thermique, une ou les deux surfaces étant balayée(s) par l'air de refroidissement et ce, selon les phases d'utilisation de l'avion au sol ou en vol. Une des deux surfaces, qu'on appellera première surface ou surface extérieure, est exposée à un flux d'air extérieur indépendamment des phases d'utilisation de l'avion de par sa disposition au sein de la turbomachine tandis que la seconde surface est disposée dans une cavité et est seulement exposée à un flux d'air dans certaines phases d'utilisation de l'avion. Ainsi, le débit d'air balayant la seconde surface peut être modulé grâce à des moyens d'obturation d'une entrée et/ou d'une sortie d'air de la cavité permettant un passage plus ou moins important, voire nul, de l'air vers la surface intérieure. Préférentiellement, la première surface est dimensionnée pour les phases d'utilisation de l'avion en vol (typiquement dans les cas au-delà de *Ground Idle*) tandis que la seconde surface est seulement balayée par l'air et dimensionnée pour apporter le supplément de refroidissement nécessaire durant les phases d'utilisation de l'avion au sol. De manière générale, les moyens d'obturation sont ouverts quand il est nécessaire d'augmenter l'échange thermique (en particulier quand la vitesse d'air est faible et, plus particulièrement, à bas régime) alors que les moyens d'obturation sont fermés quand la vitesse d'air est suffisante (en particulier en mode croisière), les moyens d'obturation étant fermés pour limiter la traînée de l'avion.

La seconde surface d'échange est munie d'ailettes et la première surface d'échange est munie d'ailettes de dimensions réduites afin de ne pas influencer les performances aérodynamiques. Cette dernière peut même être dépourvue d'ailettes si la surface d'échange thermique est de taille suffisante. Selon l'invention, l'angle d'orientation et la technologie des ailettes sont calculés pour minimiser une pondération des critères SFC et la masse choisie expressément pour chaque surface ainsi que pour optimiser les performances thermiques.

Les moyens d'obturation de l'entrée et/ou de la sortie d'air peuvent être, par exemple, un système en translation ou en rotation. Pour générer plus de débit sur la surface intérieure lors des phases de faible vitesse, l'échangeur peut en outre être muni d'un éjecteur ou blower.

Toujours selon l'invention, la chaleur issue de l'échangeur est utilisée pour dégivrer la nacelle ou, de manière plus générale, la partie de l'avion située à proximité de l'échangeur. Dans le cas de nacelles en matériau composite, le système de dégivrage est en outre muni de moyens de régulation.

### Description détaillée de l'invention

L'échangeur surfacique selon l'invention est illustré ci-dessous pour des modes de réalisation où l'échangeur comporte deux circuits d'huile. La présente invention s'étend également à d'autres modes de réalisation où l'échangeur comporte seulement un circuit d'huile.

La figure 1 illustre un échangeur surfacique air-huile double voie selon un premier mode de réalisation de l'invention où les moyens d'obturation s'ouvrent selon un mouvement de rotation.

L'échangeur 1 comporte une première 2 et une seconde 3 surface d'échange munies d'ailettes. Il comporte également un premier 4 et un second 5 circuit d'huile et est muni d'une entrée 6 et d'une sortie 7 d'air. L'entrée 6 comporte des moyens d'obturation 8 telle qu'une écope. La seconde surface d'échange 3 et le second circuit d'huile 5 sont disposés à l'intérieur d'une cavité 9 tandis que la première surface 2 se trouve à l'extérieur de la cavité 9. Dans l'exemple illustré, l'écope s'ouvre vers l'extérieur de la cavité et forme alors une écope favorisant l'entrée d'air sous sa surface intérieure. En variante (non représentée), l'écope peut s'ouvrir vers l'intérieur de la cavité afin de conserver un bon débit d'air sur la surface extérieure et en minimiser l'impact aérodynamique. Tel que ce sera décrit ci-dessous et illustré à la figure 2, l'écope peut également s'ouvrir en translation pour conserver un bon débit d'air sur la première surface et pour minimiser l'effort d'ouverture et de fermeture. Dans tous les cas de figures, l'écope est profilée pour minimiser son impact sur le flux de surface et l'équilibrer au maximum. De manière générale, les moyens d'obturation doivent être configurés pour limiter l'effort nécessaire pour les ouvrir et les fermer en limitant la force aérodynamique s'appliquant sur ces moyens d'obturation.

Dans l'exemple illustré à la figure 1, les moyens d'obturation obstruent l'entrée d'air; la présente invention s'étend également à des modes de réalisation où les moyens d'obturation obstruent la sortie d'air et à des modes de réalisation où les moyens d'obturation obstruent à la fois l'entrée et la sortie d'air.

Les moyens d'obturation sont en mesure de prendre des positions intermédiaires (voir vue 2)) entre une position complètement fermée (voir vue 1)) et complètement ouverte (voir vue 3)). Ainsi, lorsque l'avion est au sol en phase de démarrage, l'écope est soit fermée soit ouverte en fonction de la génération de chaleur et des besoins en matière de dégivrage. En 1), le cas de figure où l'écope est fermée lors de phase de démarrage de l'avion au sol est illustré. L'écope est également fermée lorsque l'avion est en mode croisière; la dissipation de chaleur est alors élevée car un gros débit d'air froid balaye la première surface. En 2), l'avion est en phase de décollage (mode MTO pour Max *Take Off*). Dans cette phase d'utilisation de l'avion, la génération de chaleur est importante et le flux d'air froid balayant la première surface peut être insuffisant pour assurer une dissipation suffisante. En conséquence, l'écope est peu ou moyennement ouverte. En 3), l'avion est au ralenti au sol (*Ground* Idle). Dans ce cas, l'échange de chaleur naturel est limité car le débit d'air froid est très faible. En conséquence, l'écope est grande ouverte et l'éjecteur est actif pour générer du débit. Dans l'exemple illustré à la figure 1 en 1), 2) et 3), l'éjecteur est intégré aux ailettes de la seconde surface d'échange (voir coupe B-B) en sortie du flux d'air. Tel que présenté en bas de la figure 1, l'éjecteur peut également être rapporté en sortie des ailettes de la seconde surface d'échange.

Selon l'invention, les moyens d'obturation peuvent être actionnés par un système indépendant tel qu'un système électrique, électro-hydraulique, hydraulique ou pneumatique. Le système d'actionnement peut être commun avec d'autres systèmes d'actionnement non utilisés en même temps (par ex., dans la nacelle: *reverse*, etc.). En variante et tel qu'illustré à la figure 1, ils peuvent également être actionnés par un ressort 12 ou par un système passif activé par la température de l'huile et disposé dans l'échangeur comme un matériau à mémoire de forme.

Le second circuit d'huile 5 délimite un conduit 10 qui canalise le flux d'air créé par l'écope assisté de manière optionnelle de l'éjecteur 11. En variante (non représentée), l'échangeur peut être dépourvu d'un second circuit d'huile avec pour conséquence, que le conduit de canalisation du flux d'air est matérialisé par l'échangeur d'une part et par une paroi de la cavité (par exemple, de la nacelle) d'autre part. Toujours en variante, l'échangeur peut être dépourvu d'un second circuit d'huile et être muni d'un anneau disposé autour des ailettes de la seconde surface pour former un conduit et augmenter la surface d'échange. Selon l'invention, un anneau peut également être disposé autour des ailettes de la première surface avec pour même objectif d'augmenter la surface d'échange. Les ailettes de la première surface ou l'anneau enveloppant les ailettes de la première surface peuvent en outre bénéficier d'un traitement acoustique afin d'absorber tout ou une partie du spectre acoustique généré par le moteur.

La figure 2 est une illustration non limitative d'un second mode de réalisation de l'invention où les moyens d'obturation s'ouvrent en translation. Dans l'exemple illustré, l'entrée et la sortie d'air sont munies de moyens d'obturation, la présente invention s'étend bien entendu à des variantes où seule l'entrée ou la sortie sont munies de moyens d'obturation. De même, l'échangeur selon ce second mode de réalisation peut présenter des caractéristiques semblables à celles décrites dans le premier mode de réalisation à savoir présence d'un anneau, traitement acoustique de l'anneau enveloppant les ailettes de la première surface ou des ailettes de la première surface, présence d'un éjecteur ou blower à proximité de la sortie d'air (non représenté), etc.

Des écopes ou moyens d'obturation 8 sont intégrés entre un premier circuit d'huile 4 présentant une première surface d'échange ou surface extérieure 2 et un second circuit d'huile 5 présentant une seconde surface d'échange ou surface intérieure 3. Chaque écope est constituée d'une virole ou de segments de virole (de manière générale, l'écope épouse le profil de l'échangeur). Ce mode de réalisation permet d'intégrer le système d'actionnement des écopes au sein de l'échangeur thermique sur le principe de fonctionnement d'un piston. Lorsque les écopes d'entrée et de sortie doivent fermer la cavité 9 tel que présenté en bas de la figure 2, un fluide de commande (air ou huile) est envoyé dans les chambres 13 et/ou 14. Lorsque la cavité 9 doit être ouverte tel que présenté en haut de la figure 2, un ressort 12 peut par exemple permettre le retour des écopes au sein du corps de l'échangeur. Selon ce mode de réalisation, les moyens d'obturation sont également en mesure de prendre des positions intermédiaires entre une position complètement fermée ou complètement ouverte.

Comme déjà mentionné, la surface intérieure de l'échangeur surfacique selon les différents modes de réalisation de l'invention doit être disposée en regard d'une cavité ou d'un conduit en prolongement de la cavité d'entrée d'air qui peut être traversé par un flux d'air lorsque l'entrée et la sortie d'air de la cavité n'est pas obstruée. A titre d'exemple, l'échangeur selon l'invention peut être disposé au niveau de la nacelle de l'avion. Il peut être disposé sur la paroi extérieure de la nacelle, c.à.d. la paroi qui n'est pas en regard de la soufflante. La première surface étant disposée à l'extérieur de la cavité tandis que la seconde surface est disposée à l'intérieur de la cavité de la nacelle. L'échangeur peut également être disposé sur la paroi intérieure de la nacelle en amont ou en aval de la soufflante (l'air s'écoulant depuis l'amont vers l'aval) et, plus précisément, dans la veine secondaire dans ce dernier cas. Il peut être également disposé dans le flux secondaire sur l'extérieur du séparateur séparant le flux primaire du flux secondaire du moteur. La configuration où l'échangeur est disposé sur la paroi intérieure de la nacelle en aval de la soufflante a pour avantage que la première surface est protégée des FOD, qu'elle est balayée par un débit d'air de la soufflante dès le démarrage du moteur sans que l'avion soit en mouvement et qu'elle ne constitue pas un risque de brûlures pour un passager imprudent.

Toujours selon l'invention, l'échangeur peut être disposé de manière continue sur la paroi intérieure ou extérieure de la nacelle ou sur l'extérieur du séparateur formant alors un anneau ou bien être disposé sous forme de plaque non annulaire.

Selon l'invention et comme déjà mentionné, l'échangeur air-huile peut être utilisé à des fins de dégivrage d'une surface sujette à l'accrétion de glace. Le transfert de chaleur peut s'effectuer par contact direct (par exemple, par contact avec l'huile ou encore via une lame réalisant un pont thermique) si la surface de l'échangeur est en contact avec la surface à dégivrer. Le transfert de chaleur peut également s'effectuer par convection naturelle puisque les ailettes de la surface intérieure représentent une source de transfert de chaleur dans la cavité lorsque celle-ci est obstruée et permettent donc de dégivrer les surfaces dans l'environnement proche. Le dégivrage peut aussi être effectué par conduction via un pont thermique réalisé par exemple via une lame métallique. Enfin le dégivrage peut également être effectué via un circuit secondaire, par exemple, de type boucle diphasique.

### Avantages de l'invention

L'échangeur thermique selon l'invention permet de réguler le refroidissement de l'huile tout en conservant les bénéfices liés à l'échangeur surfacique. Ainsi, l'impact aérodynamique et acoustique de l'échangeur est minimisé de par l'utilisation de la technologie surfacique, de par le dimensionnement de la surface extérieure pour les cas «vol» avec des ailettes de taille réduite, voire sans ailettes et de par la fermeture de la partie intérieure pour les cas «vol».

Grâce à l'utilisation de l'énergie thermique de l'échangeur pour le dégivrage, il n'est plus nécessaire de prélever de l'énergie au moteur avec, pour conséquence, un gain de rendement.

## Revendications

1. Echangeur surfacique air-huile (1) dans un moteur d'avion comportant au moins un premier circuit d'huile (4) et au moins une première (2) et une seconde surface d'échange (3) disposée de part et d'autre du premier circuit d'huile (4) et pouvant chacune être balayée par un flux d'air, ladite seconde surface d'échange (3) étant disposée dans une cavité (9) munie d'une entrée d'air (6) et d'une sortie d'air (7), **caractérisé en ce que** ladite entrée (6) et/ou ladite sortie (7) comporte(nt) des moyens d'obturation (8) permettant de réguler l'apport d'air sur la seconde surface d'échange (3).

2. Echangeur surfacique (1) selon la revendication 1, **caractérisé en ce que** les moyens d'obturation (8) sont en mesure de prendre des positions intermédiaires entre une position complètement fermée et une position complètement ouverte, lesdits moyens étant configurés pour être complètement fermés lorsqu'il faut limiter la traînée de l'avion et pour être ouverts lorsqu'il faut augmenter l'échange thermique.

3. Echangeur surfacique (1) selon la revendication 1, **caractérisé en ce que** les moyens d'obturation (8) sont configurés pour être complètement fermés lorsque l'avion est en mode croisière ou en phase de démarrage au sol, pour être ouverts en position intermédiaire lorsque l'avion est en phase de décollage et pour être complètement ouverts lorsque l'avion est en mode ralenti au sol.

4. Echangeur surfacique (1) selon l'une quelconque des revendications précédentes, **caractérisé en ce que** les moyens d'obturation (8) sont sélectionnés parmi un groupe constitué d'un système en translation et d'un système en rotation.

5. Echangeur surfacique (1) selon l'une quelconque des revendications précédentes, **caractérisé en ce que** la première surface d'échange (2) ne comporte pas d'ailettes ou est munie d'ailettes dont la taille est dimensionnée pour réduire l'impact sur les performances aérodynamiques, et, **en ce que** la seconde surface d'échange (3) est munie d'ailettes.

6. Echangeur surfacique (1) selon la revendication 5, caractérisé en qu'un second circuit d'huile (5) est disposé dans la cavité (9) en dessous des ailettes de la seconde surface d'échange (3) ou est disposé entre le premier circuit d'huile (4) et la seconde surface d'échange (3).

7. Echangeur surfacique (1) selon la revendication 5, **caractérisé en ce qu'**un anneau enveloppe les ailettes de la première (2) et/ou de la seconde (3) surface pour augmenter la surface d'échange.

8. Echangeur surfacique (1) selon l'une quelconque des revendications précédentes, **caractérisé en ce qu'**un éjecteur ou blower (11) est disposé dans la cavité (9) à proximité de la sortie d'air (7).

9. Echangeur surfacique (1) selon la revendication 8, **caractérisé en ce que** l'éjecteur ou blower (11) est intégré aux ailettes de la seconde surface (3) ou rapporté en aval desdites ailettes.

10. Echangeur surfacique (1) selon la revendication 5 ou 7, **caractérisé en ce que** l'anneau enveloppant les ailettes de la première surface (2) de l'échangeur ou les ailettes de la première surface (2) bénéficient d'un traitement acoustique afin d'absorber tout ou une partie du spectre acoustique généré par le moteur.

11. Echangeur surfacique (1) selon l'une quelconque des revendications précédentes, **caractérisé en ce qu'**il est muni de moyens assurant un dégivrage à proximité de l'endroit où il est disposé; lesdits moyens étant configurés pour que le transfert de chaleur s'effectue soit par contact direct avec l'huile de l'échangeur surfacique (1), soit par convection naturelle, soit par conduction via un pont thermique ou encore par un circuit secondaire via une boucle diphasique.

12. Echangeur surfacique (1) selon l'une quelconque des revendications précédentes, **caractérisé en ce que** ledit échangeur (1) est disposé sur une paroi intérieure ou extérieure d'une nacelle de l'avion, la seconde surface d'échange (3) étant disposée dans la cavité (9) de la nacelle.

13. Echangeur surfacique (1) selon la revendication 12, **caractérisé en ce que** ledit échangeur (1) est disposé en amont ou en aval d'une soufflante du moteur de l'avion dans la partie intérieure de la nacelle.

14. Echangeur surfacique (1) selon l'une quelconque des revendications précédentes, **caractérisé en ce que** les moyens d'obturation (8) sont configurés pour être actionnés par un système électrique, électrohydraulique, hydraulique ou pneumatique.

15. Moteur d'avion comportant un échangeur surfacique air-huile (1) selon l'une quelconque des revendications 1 à 14.

## Patentansprüche

1. Luft-Öl-Oberflächenwärmetauscher (1) in einem Flugzeugmotor, der mindestens einen ersten Ölkreis (4) und mindestens eine erste (2) und eine zweite Austauschfläche (3) aufweist, die auf der einen und der anderen Seite des ersten Ölkreises (4) angeordnet und jeweils von einem Luftstrom bestreichbar sind, wobei die zweite Austauschfläche (3) in einem Hohlraum (9) angeordnet ist, der mit einem Lufteingang (6) und einem Luftausgang (7) ausgestattet ist, **dadurch gekennzeichnet, dass** der Eingang (6) und/oder der Ausgang (7) Verschlussmittel (8) aufweist/aufweisen, die die Regulation der Luftzufuhr über die zweite Austauschfläche (3) erlauben.

2. Oberflächenwärmetauscher (1) nach Anspruch 1, **dadurch gekennzeichnet, dass** die Verschlussmittel (8) in der Lage sind, Zwischenstellungen zwischen einer vollständig geschlossenen Stellung und einer vollständig geöffneten Stellung einzunehmen, wobei die Mittel konfiguriert sind, um vollständig geschlossen zu sein, wenn der Widerstand des Flugzeugs begrenzt werden muss, und um vollständig geöffnet zu sein, wenn der thermische Austausch erhöht werden muss.

3. Oberflächenwärmetauscher (1) nach Anspruch 1, **dadurch gekennzeichnet, dass** die Verschlussmittel (8) konfiguriert sind, um vollständig geschlossen zu sein, wenn sich das Flugzeug im Flugmodus oder in der Startphase vom Boden befindet, um in Zwischenstellung geöffnet zu sein, wenn sich das Flugzeug in der Abhebephase befindet und um vollständig geöffnet zu sein, wenn sich das Flugzeug im verlangsamten Modus am Boden befindet.

4. Oberflächenwärmetauscher (1) nach einem der vorangehenden Ansprüche, **dadurch gekennzeichnet, dass** die Verschlussmittel (8) aus einer Gruppe ausgewählt sind, die von einem verschiebenden System und einem drehenden System gebildet wird.

5. Oberflächenwärmetauscher (1) nach einem der vorangehenden Ansprüche, **dadurch gekennzeichnet, dass** die erste Austauschfläche (2) keine Flügel aufweist oder mit Flügeln ausgestattet ist, deren Größe derart bemessen ist, um die Auswirkungen auf die aerodynamischen Leistungen zu reduzieren und dadurch, dass die zweite Austauschfläche (3) mit Flügeln ausgestattet ist.

6. Oberflächenwärmetauscher (1) nach Anspruch 5, **dadurch gekennzeichnet, dass** ein zweiter Ölkreis (5) im Hohlraum (9) unter den Flügeln der zweiten Austauschfläche (3) angeordnet ist oder zwischen dem ersten Ölkreis (4) und der zweiten Austauschfläche (3) angeordnet ist.

7. Oberflächenwärmetauscher (1) nach Anspruch 5, **dadurch gekennzeichnet, dass** ein Ring die Flügel der ersten (2) und/oder der zweiten (3) Fläche umschließt, um die Austauschfläche zu vergrößern.

8. Oberflächenwärmetauscher (1) nach einem der vorangehenden Ansprüche, **dadurch gekennzeichnet, dass** im Hohlraum (9) in der Nähe des Luftausgangs (7) ein Ejektor oder Blower (11) angeordnet ist.

9. Oberflächenwärmetauscher (1) nach Anspruch 8, **dadurch gekennzeichnet, dass** der Ejektor oder Blower (11) in die Flügel der zweiten Fläche (3) integriert oder nach den Flügeln aufgesetzt ist.

10. Oberflächenwärmetauscher (1) nach Anspruch 5 oder 7, **dadurch gekennzeichnet, dass** der Ring, der die Flügel der ersten Fläche (2) des Wärmetauschers umschließt oder die Flügel der ersten Fläche (2) akustisch behandelt sind, um das gesamte Spektrum oder einen Teil des akustischen Spektrums, das von dem Motor erzeugt wird, zu absorbieren.

11. Oberflächenwärmetauscher (1) nach einem der vorangehenden Ansprüche, **dadurch gekennzeichnet, dass** er mit Mitteln ausgestattet ist, die eine Enteisung in der Nähe der Stelle sicherstellen, wo er angeordnet ist, wobei die Mittel konfiguriert sind, damit der Wärmetransfer entweder durch direkten Kontakt mit dem Öl des Oberflächenwärmetauschers (1) oder durch natürliche Konvektion oder durch Leitung über eine Wärmebrücke oder auch durch einen sekundären Kreis über eine Zweiphasenschleife erfolgt.

12. Oberflächenwärmetauscher (1) nach einem der vorangehenden Ansprüche, **dadurch gekennzeichnet, dass** der Wärmetauscher (1) auf einer Innen- oder Außenwand einer Motorgondel des Flugzeugs angeordnet ist, wobei die zweite Austauschfläche (3) im Hohlraum (9) der Motorgondel angeordnet ist.

13. Oberflächenwärmetauscher (1) nach Anspruch 12, **dadurch gekennzeichnet, dass** der Wärmetauscher (1) vor oder nach einem Gebläse des Motors des Flugzeugs im inneren Teil der Motorgondel angeordnet ist.

14. Oberflächenwärmetauscher (1) nach einem der vorangehenden Ansprüche, **dadurch gekennzeichnet, dass** die Verschlussmittel (8) konfiguriert sind, um durch ein elektrisches, elektrohydraulisches, hydraulisches oder pneumatisches System betätigt zu sein.

15. Flugzeugmotor, der einen Luft-Öl-Oberflächenwärmetauscher (1) nach einem der Ansprüche 1 bis 14 aufweist.

## Claims

1. A surface air-cooled oil cooler (1) in an airplane engine comprising at least one first oil circuit (4) and at least a first (2) and a second (3) exchange surface positioned on either side of the first oil circuit (4) and each able to be swept by an air flow, said second exchange surface (3) being positioned in a cavity (9) provided with an air inlet (6) and an air outlet (7), **characterised in that** said inlet (6) and/or said outlet (7) comprise(s) covering means (8) that allow to regulate the air supply on the second exchange surface (3).

2. The surface exchanger (1) as in Claim 1, wherein the covering means (8) can assume intermediate positions between a completely closed position and a completely open position, said means being configured to be completely closed when the drag of the airplane should be limited, and to be open when the heat exchange should be increased.

3. The surface exchanger (1) as in Claim 1, wherein the covering means (8) are configured to be completely closed when the airplane is in cruising mode or in the ground start phase, to be opened in the intermediate position when the airplane is in the takeoff phase, and to be completely open when the airplane is in ground idle mode.

4. The surface exchanger (1) as in any of the previous claims, wherein the covering means (8) are selected from the group consisting of a translation system and of a rotation system.

5. The surface exchanger (1) as in any of the previous claims, wherein the first exchange surface (2) does not comprise fins or is provided with fins whose size is dimensioned to reduce the impact on aerodynamic performance, and wherein the second exchange surface (3) is provided with fins.

6. The surface exchanger (1) as in Claim 5, wherein a second oil circuit (5) is positioned in the cavity (9) below the fins of the second exchange surface (3) or is positioned between the first oil circuit (4) and the second exchange surface (3).

7. The surface exchanger (1) as in Claim 5, wherein a ring surrounds the fins of the first (2) and/or of the second (3) surface to increase the exchange surface.

8. The surface exchanger (1) as in any of the previous claims, wherein a blower (11) is positioned in the cavity (9) near the air outlet (7).

9. The surface exchanger (1) as in Claim 8, wherein the blower (11) is integrated to the fins of the second surface (3) or fastened downstream of said fins.

10. The surface exchanger (1) as in Claim 5 or 7, wherein the ring surrounding the fins of the first surface (2) of the exchanger or the fins of the first surface (2) benefit from a sound treatment in order to absorb the entire or part of the sound spectrum generated by the engine.

11. The surface exchanger (1) as in any of the previous claims, which is provided with means ensuring the deicing near the location where it is positioned; said means being configured so that the heat transfer occurs either through direct contact with the oil of the surface exchanger (1), or through natural convection, or through conduction via a thermal bridge, or even through a secondary circuit via a diphasic loop.

12. The surface exchanger (1) as in any of the previous claims, wherein said exchanger (1) is positioned in the inner or outer wall of a nacelle of the airplane, the second exchange surface (3) being positioned in the cavity (9) of the nacelle.

13. The surface exchanger (1) as in Claim 12, wherein said exchanger (1) is positioned upstream or downstream of the fan of the airplane engine in the inner portion of the nacelle.

14. The surface exchanger (1) as in any of the previous claims, wherein the covering means (8) are configured to be actuated by an electric, electrohydraulic, hydraulic, or pneumatic system.

15. An airplane engine comprising an air-cooled oil cooler (1) as in any of Claims 1 to 14.
